# DEMANDE DE BREVET EUROPEEN

(11) **EP 1 995 449 A2**
(43) Date de publication de la demande: **26.11.2008**
(21) Numéro de dépôt: 08156226.6
(22) Date de dépôt: 15.05.2008
(51) Int. Cl.: F02N 11/08

(54) **Procédé de commande de l'arrêt et du redémarrage automatique du moteur d'un véhicule en fonction de la pente**

(30) Priorité: 23.05.2007 FR 0755208
(71) Demandeur: Peugeot Citroën Automobiles SA, 78943 Vélizy-Villacoublay Cedex (FR)
(72) Inventeur: Mathieu, Boris, 75015, Paris (FR); Beddok, Stéphane, 92160, Antony (FR)
(74) Mandataire: Ménès, Catherine

(57) **Abrégé**

L'invention concerne un procédé de commande de l'arrêt et du redémarrage automatique du moteur thermique d'un véhicule automobile muni d'une boite de vitesse mécanique, en fonction de l'inclinaison P du véhicule.

Selon invention, la commande de l'arrêt et du redémarrage est fonction de la réalisation d'un ensemble de conditions prédéterminées qui dépendent de ladite inclinaison.

## Description

La présente invention concerne un procédé de commande de l'arrêt et du redémarrage automatique du moteur thermique d'un véhicule automobile en fonction de la pente de la route sur laquelle se trouve le véhicule. Ce dernier est muni d'une boite de vitesse mécanique. Le véhicule peut être équipé d'un moteur thermique, ou de deux moteurs, l'un thermique et l'autre électrique dans le cas d'un véhicule hybride.

Par boite de vitesses mécanique, on entend une boite de vitesses commandée à l'aide d'une pédale d'embrayage et d'un levier de changement de rapport.

Afin de réduire la consommation en carburant et la pollution des véhicules automobiles, des systèmes de mise en marche et d'arrêt automatique du moteur thermique ont été conçus et commercialisés pour permettre l'arrêt du moteur thermique lorsqu'il n'est pas utilisé, par exemple lors des phases de ralenti et plus particulièrement lorsque le véhicule est arrêté à un feu rouge. Ces systèmes sont habituellement désignés par l'appellation « Stop & Start » ou par son abréviation S&S.

La demande de brevet FR 2 816 891, déposée par la demanderesse, décrit un système S&S dans lequel l'arrêt du moteur thermique est systématiquement empêché lorsque la route est en pente afin d'éviter que l'assistance de conduite ne soit indisponible dans une telle situation.

La présente invention propose un procédé qui améliore les performances d'un système S&S en sélectionnant des conditions d'arrêt et de redémarrage du moteur thermique en fonction de la pente de la route sur laquelle se trouve le véhicule et donc en fonction de l'inclinaison du véhicule.

De façon plus précise l'invention concerne un procédé de commande de l'arrêt et du redémarrage automatique du moteur thermique d'un véhicule automobile muni d'une boite de vitesse mécanique, en fonction de l'inclinaison du véhicule. Selon le procédé, la commande de l'arrêt et du redémarrage est fonction de la réalisation d'au moins un ensemble de conditions prédéterminées qui dépendent de l'inclinaison du véhicule.

Si l'inclinaison est inférieure à un seuil prédéterminé, l'arrêt du moteur est automatiquement commandé si les conditions de l'un des ensembles suivants de conditions sont réalisées :
* Premier ensemble :
   - la pédale d'embrayage est relâchée,
   - la boite de vitesse est au point mort, et
   - la vitesse du véhicule est inférieure à un seuil de vitesse v1 prédéterminé ;
* Deuxième ensemble :
   - la pédale d'embrayage est enfoncée,
   - la pédale de frein est enfoncée, et
   - la vitesse du véhicule est inférieure à un seuil de vitesse v2 prédéterminé.

De façon avantageuse les seuils de vitesse v1 et v2 peuvent être compris entre 20 et 30 km/h et entre 10 et 20 km/h respectivement.

Si l'inclinaison est inférieure à un seuil prédéterminé, le redémarrage du moteur est commandé si les conditions de l'ensemble suivant de conditions sont réalisées :
- la boite de vitesse RB est au point mort faux,
- la pédale d'embrayage PE est enfoncée, et
- la pédale de frein PF est relâchée.

Par point mort faux, il est entendu toute position dans laquelle le levier de vitesse n'est pas au point mort, soit qu'une vitesse soit effectivement engagée, soit qu'elle soit en cours d'engagement, comme c'est par exemple le cas lorsque le conducteur manipule son levier de vitesse.

Si l'inclinaison est supérieure à un seuil prédéterminé, l'arrêt du moteur est commandé si les conditions suivantes sont réalisées :
- la pédale d'embrayage est relâchée,
- la boite de vitesse est au point mort, et
- la vitesse du véhicule est inférieure à un seuil de vitesse v3 prédéterminé.

Si l'inclinaison est supérieure à un seuil prédéterminé, le redémarrage du moteur est commandé si les conditions suivantes sont réalisées :
- la pédale d'embrayage est enfoncée, et
- la boite de vitesse est en position de sortie du point mort. Par sortie de point mort, il est entendu que le véhicule était au point mort et que le conducteur a manifesté son intention de redémarrer en déplaçant par exemple son levier de vitesse (même si à l'instant considéré, une vitesse n'est pas encore engagée à proprement dit).

Avantageusement, le seuil prédéterminé d'inclinaison peut être choisi entre 5% et 10% et le seuil de vitesse v3 peut être choisi par exemple compris entre 20 et 30km/h.

D'autres avantages et caractéristiques de l'invention apparaîtront au cours de la description qui suit, description faite en référence aux dessins annexés et sur lesquels :
- la figure 1 illustre le procédé de l'invention lorsqu'une pente n'est pas détectée, et
- la figure 2 illustre le procédé lorsqu'une pente est détectée.

Selon l'invention, les conditions de l'arrêt et du redémarrage du moteur dépendent de la détection, ou non, d'une pente de la route sur laquelle roule le véhicule. La pente de la route, et donc l'inclinaison du véhicule, peut être mesurée par tout moyen approprié, tel qu'un capteur d'inclinaison. Si aucune pente n'est détectée, c'est-à-dire si l'inclinaison détectée est inférieure à un seuil prédéterminé, choisi par exemple à une valeur comprise entre 5 et 10%, la stratégie d'arrêt et de redémarrage du moteur thermique est basée sur l'observation de la position de la pédale d'embrayage, de la position du levier de changement de vitesse et de la position de la pédale de frein. Les conditions d'arrêt et de redémarrage du moteur thermique dépendent de la réalisation, ou de la non réalisation, d'un ensemble de conditions qui sont les suivantes :

### A : Si aucune pente n'est détectée :

*le moteur est arrêté si :
- la pédale d'embrayage est en position relâchée, donc non enfoncée,
- le levier de la boite de vitesses est au point mort, et
- la vitesse du véhicule est inférieure à un seuil de vitesse v1 prédéterminée, par exemple choisi entre 20 et 30 km/h.

Le moteur peut aussi être arrêté si les conditions suivantes sont réunies :
- la pédale d'embrayage est en position enfoncée,
- la pédale de frein est en position enfoncée, et
- la vitesse du véhicule est inférieure à un seuil de vitesse v2 prédéterminée, par exemple compris entre 10 et 20 km/h.

*Le redémarrage du moteur est autorisé (en l'absence de pente) si les conditions de l'un des ensembles de conditions suivantes sont réunies :
- la pédale d'embrayage est en position enfoncée,
- le levier de commande de la boite de vitesse est au point mort faux (c'est-à-dire que le levier n'est pas au point mort), et
- la pédale de frein est relâchée.

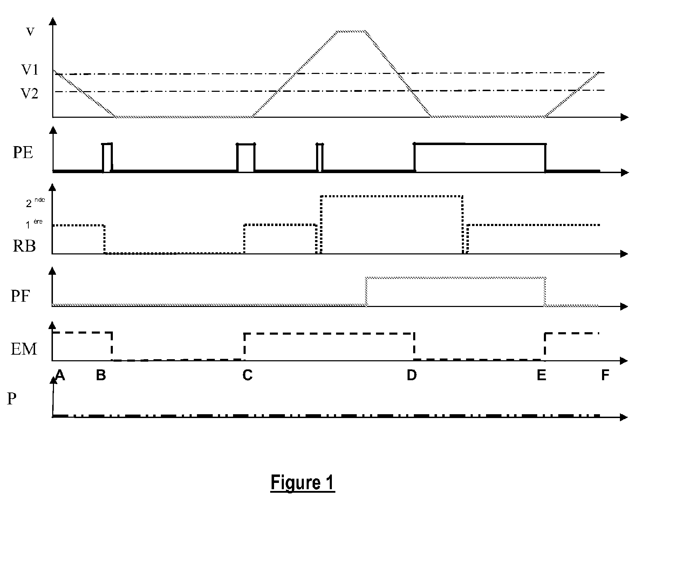

Ces conditions sont illustrées sur la figure 1 qui concerne l'absence de pente P. L'état du moteur est représenté sur le graphe EM, les niveaux hauts représentés par les périodes AB, CD et EF, correspondent au moteur en marche et les niveaux bas BC et DE correspondent au moteur arrêté. Les différentes conditions suivantes sont représentées :
- la vitesse v du véhicule,
- la position de la pédale d'embrayage PE, le niveau bas correspondant à la pédale relâchée et le niveau haut à la pédale enfoncée,
- le rapport de boite de vitesses RB, le niveau bas correspondant au point mort, le niveau intermédiaire à la première vitesse et le niveau supérieur à la deuxième vitesse,
- la position de la pédale de frein PF, le niveau zéro ou inférieur correspondant à la pédale relâchée, le niveau supérieur correspondant à la pédale de frein enfoncée.

### B : Si la pente détectée est inférieure à un seuil prédéterminé :

Sur la figure 1, on remarque que le moteur est arrêté au point B, car, en absence de pente, les conditions suivantes sont réunies : la pédale d'embrayage PE est relâchée, le rapport de boite de vitesses RB est au point mort (le conducteur venant de passer du 1^{er} rapport au point morte), la vitesse v du véhicule est inférieure à un seuil de vitesse v1 prédéterminé. Le moteur est également arrêté au point D car la pédale d'embrayage PE est enfoncée, la pédale de frein PF est enfoncée et la vitesse v du véhicule est inférieure à un seuil v2.

Le moteur est remis en marche au point C car la pédale d'embrayage PE est relâchée, la boite de vitesses RB est au 1^{er} rapport et la pédale de frein PF est non appuyée. Le moteur est également remis en marche au point E car la pédale de frein PF est relâchée, la boite de vitesse est au 1^{er} rapport (point mort faux) et la pédale d'embrayage PE est enfoncée.

### C : Si la pente détectée est supérieure ou égale au seuil prédéterminé :

Dans ce cas, la stratégie décrite précédemment ne permet pas au conducteur de réaliser des phases de patinage de l'embrayage en ayant la pédale de frein enfoncée lors des démarrages en pente. Pour ne pas détériorer l'agrément de conduite, si une pente est détectée, les conditions d'arrêt et de redémarrage sont modifiées et deviennent :

*le moteur est arrêté si :
- la pédale d'embrayage est relâchée,
- le levier de boite de vitesses est au point mort, et
- la vitesse du véhicule est inférieure à un seuil de vitesse v3, qui peut par exemple être choisi par exemple compris entre 20 et 30km/h.

*Le moteur est redémarré si :
- la pédale de frein est enfoncée, et
- le levier de boite de vitesse est en sortie de point mort.

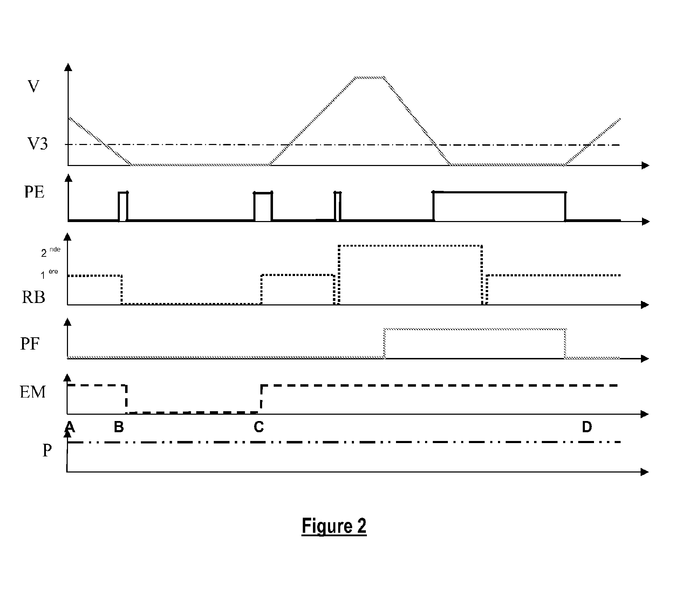

Cette stratégie d'arrêt et de redémarrage du moteur thermique lorsque la pente détectée est supérieure ou égale à la valeur du seuil, est illustrée sur la figure 2. Sur cette figure sont illustrés, comme pour la figure 1, la vitesse v, la position de la pédale d'embrayage PE (relâchée au niveau inférieur et enfoncée au niveau supérieur), le rapport de boite de vitesse RB (avec successivement le point mort au niveau inférieur, puis le 1^{er} rapport, puis le second rapport), la pédale de frein PF relâchée (au niveau inférieur) et enfoncée(au niveau supérieur), l'état du moteur thermique EM arrêté au niveau inférieur (pendant la période BC) et en marche au niveau supérieur (pendant les périodes AB et CD) et la pente P de la route sur laquelle se trouve le véhicule. Sur la figure 2, il est illustré une pente constante qui correspond à une inclinaison supérieure à un seuil d'inclinaison ou de pente prédéterminé, choisi par exemple supérieur à une valeur comprise entre 5% et 10%.

On remarque que le moteur est automatiquement arrêté au point B car la pédale d'embrayage PE est relâchée, le rapport de boite de vitesses RB est le point mort et la vitesse du véhicule est inférieure à un seuil de vitesse v3. Le seuil de vitesse v3 peut être par exemple compris entre 20 et 30km/h. Le choix des seuils de vitesse v1, v2 et v3 résulte d'un compromis entre les contraintes de sécurité et d'agrément de conduite et les économies d'énergie qu'on se propose de réaliser.

Le moteur est remis en marche au point C car la boite de vitesse RB est en sortie de point mort et la pédale d'embrayage PE est enfoncée.

La pente et la vitesse du véhicule, les positions des pédales de frein et d'embrayage et la position du levier de boite de vitesses sont détectées de façon classique à l'aide de capteurs. La stratégie d'arrêt et de redémarrage du moteur thermique peut être mise en oeuvre à l'aide par exemple d'un microprocesseur, qui peut, ou non, être spécialement dédié à la fonction S&S. Tous ces moyens sont bien connus de l'homme du métier et sont décrits, par exemple, dans la demande de brevet FR 2 816 891 déposée par la demanderesse et incorporée par référence à la présente description.

Le redémarrage du moteur thermique peut être assuré par tout moyen approprié tel par exemple qu'un démarreur classique ou un alternateur réversible.

Lorsque la pente devient trop importante, des moyens permettent d'empêcher l'arrêt du moteur thermique (inhibition de la fonction S&S) pour des raisons de sécurité (bénéficier du frein moteur) et d'agrément de conduite.

## Revendications

1. Procédé de commande de l'arrêt et du redémarrage automatique du moteur thermique d'un véhicule automobile muni d'une boite de vitesse mécanique, en fonction de l'inclinaison P du véhicule **caractérisé en ce que**, si l'inclinaison P est inférieure à un seuil prédéterminé, l'arrêt du moteur est commandé si les conditions de l'un des ensembles suivants de conditions sont réalisées :
* Premier ensemble:
■ la pédale d'embrayage PE est relâchée,
■ la boite de vitesse RB est au point mort, et
■ la vitesse v du véhicule est inférieure à un seuil de vitesse v1 prédéterminé, compris entre 20 et 30 km/h ;
* Deuxième ensemble :
■ la pédale d'embrayage PE est enfoncée,
■ la pédale de frein PF est enfoncée, et
■ la vitesse v du véhicule est inférieure à un seuil de vitesse v2 prédéterminé.

2. Procédé selon la revendication 2 **caractérisé en ce que** le seuil de vitesse v2 est compris entre 10 et 20 km/h.

3. Procédé selon la revendication 1 **caractérisé en ce que**, si l'inclinaison P est inférieure à un seuil prédéterminé, le redémarrage du moteur est commandé si les conditions de l'ensemble suivant de conditions sont réalisées ;
■ la boite de vitesse RB est au point mort faux,
■ la pédale d'embrayage PE est enfoncée, et
■ la pédale de frein PF est relâchée

4. Procédé de commande de l'arrêt et du redémarrage automatique du moteur thermique d'un véhicule automobile muni d'une boite de vitesse mécanique, en fonction de l'inclinaison P du véhicule, **caractérisé en ce que**, si l'inclinaison P est supérieure à un seuil prédéterminé, l'arrêt du moteur est commandé si les conditions suivantes sont réalisées :
■ la pédale d'embrayage PE est relâchée,
■ la boite de vitesse RB est au point mort, et
■ la vitesse v du véhicule est inférieure à un seuil de vitesse v3 prédéterminé

5. Procédé selon la revendication 1 **caractérisé en ce que**, si l'inclinaison P est supérieure à un seuil prédéterminé, le redémarrage du moteur est commandé si les conditions suivantes sont réalisées
■ la pédale d'embrayage PE est enfoncée, et
■ la boite de vitesse RB est en position de sortie du point mort.

6. Procédé selon l'une quelconque des revendications précédentes, **caractérisé en ce que** ledit seuil prédéterminé d'inclinaison est compris entre 5% et 10%.
